# FASCICULE DE BREVET EUROPEEN

(11) **EP 4 370 408 B1**
(45) Date de publication et mention de la délivrance du brevet: **30.07.2025**
(21) Numéro de dépôt: 22744245.6
(22) Date de dépôt: 16.06.2022
(51) Int. Cl.: B62D 35/02, B62D 65/02, B62D 65/16

(54) **DÉFLECTEUR AÉRODYNAMIQUE DESTINÉ À ÊTRE FIXÉ CONTRE LE SOUBASSEMENT DE CAISSE D'UN VÉHICULE AUTOMOBILE ET POURVU DE MOYENS DE PRÉ-MAINTIEN**
AERODYNAMISCHER DEFLEKTOR ZUR BEFESTIGUNG AM UNTERBODEN EINER KRAFTFAHRZEUGKAROSSERIE MIT VORRÜCKHALTEMITTELN
AERODYNAMIC DEFLECTOR INTENDED TO BE SECURED TO THE UNDERBODY OF A MOTOR VEHICLE BODY SHELL AND PROVIDED WITH PRE-RETENTION MEANS

(30) Priorité: 16.07.2021 FR 2107725
(43) Date de publication de la demande: 22.05.2024
(73) Titulaire: Stellantis Auto SAS, 78300 Poissy (FR)
(72) Inventeur: BERTH, Stephane, 92320 CHATILLON (FR)
(74) Mandataire: BCIP
(86) Numéro de dépôt international: PCT/FR2022/051168
(87) Numéro de publication internationale: WO 2023/285742

(56) Documents cités:
- FR-A1- 2 922 511
- FR-A1- 3 099 740

## Description

### [Domaine technique]

L'invention concerne de manière générale l'aérodynamisme des véhicules automobiles et notamment l'aérodynamisme sous caisse.

Plus particulièrement, l'invention se rapporte à un déflecteur aérodynamique destiné à être monté sous le soubassement de caisse d'un tel véhicule automobile.

### [Technique antérieure]

L'aérodynamisme a tendance à prendre une part de plus en plus importante dans la conception d'un véhicule automobile, tant ses effets sont grands sur la consommation en carburant et le comportement sur route, notamment à grande vitesse.

L'amélioration des performances aérodynamiques des véhicules peut donc contribuer significativement à la réduction des émissions polluantes, par la baisse de la consommation de carburant, tout en rendant les véhicules plus sûrs et confortables sur le plan acoustique.

Le soubassement du véhicule ayant un impact conséquent sur la traînée d'air générée à l'arrière du véhicule, les constructeurs automobiles se sont donc orientés vers un carénage du soubassement et une diminution de la garde au sol pour limiter le volume d'air s'engouffrant sous le véhicule et faciliter l'écoulement d'air sous la caisse.

Il est habituel aujourd'hui d'équiper les véhicules avec des déflecteurs en matériau plastique qui sont disposés sous le soubassement de caisse pour améliorer l'aérodynamisme et protéger contre des chocs des éléments sensibles du véhicule implantés sous le plancher tels que par exemple les circuits de canalisations d'une batterie de propulsion.

Du fait de leur taille et de leur poids non négligeables, l'installation sur les lignes d'assemblage des déflecteurs aérodynamiques sous le plancher des véhicules automobiles peut s'avérer être une opération physiquement difficile à effectuer par un seul opérateur.

Afin de faciliter ces opérations de montage, il est connu, notamment du document FR 3 099 740 A1, de prévoir au niveau des deux coins de l'une des extrémités longitudinales de ce déflecteur des moyens de pré-maintien aptes à coopérer avec des moyens complémentaires prévus sur le soubassement du véhicule, de sorte à assurer un pré-maintien de ce déflecteur sur le soubassement en position suspendue à la verticale.

Ces moyens de pré-maintien sont en outre configurés de sorte que le déflecteur puisse librement pivoter vis-à-vis du soubassement du véhicule autour d'un axe transversal, de sorte à permettre son rabattement en position horizontale contre ce soubassement.

Lors de cette opération de rabattement du déflecteur, des goujons soudés aux bords latéraux du plancher du véhicule viennent s'insérer au travers d'orifices correspondants ménagés dans les bords latéraux du déflecteur.

Des bagues de pré-maintien sont ensuite montées en encliquetage sur ces goujons de sorte à assurer le pré-maintien en position de montage du déflecteur (le pourtour de chacun de ses orifices étant pris en sandwich entre le plancher du véhicule et une bague de pré-maintien correspondante).

La fixation définitive du déflecteur est ensuite assurée classiquement par le vissage d'écrous sur d'autres goujons répartis sur la surface du plancher et ayant traversés d'autres orifices répartis sur la surface du déflecteur lors de son rabattement en position horizontale contre ce plancher.

Dans le cas de véhicules électriques ou hybrides pourvus d'une batterie de propulsion s'étendant sous le plancher, il n'est pas possible de souder des goujons directement sur le carter de la batterie de propulsion.

En effet, en cas de choc avec un élément extérieur au véhicule tel qu'une pierre ou une souche d'arbre, un tel goujon pourrait subir un effort de torsion suffisant pour entrainer un arrachement du carter de la batterie et la détérioration de certains éléments sensibles de cette batterie.

Pour ces véhicules électriques ou hybrides, la fixation définitive du déflecteur est donc assurée autrement par l'insertion de boulons au travers d'orifices répartis sur la surface du déflecteur et leur vissage dans des écrous soudés sur le carter de cette batterie de propulsion.

Réalisé généralement en matière plastique de faible épaisseur et présentant des dimensions surfaciques importantes typiquement de l'ordre du mètre carré, un tel déflecteur a tendance, du fait de sa masse, à ce cintrer légèrement lorsqu'il est pré-maintenu en position horizontale de montage, ce qui a tendance à décaler légèrement les axes de ses orifices vis-à-vis de ceux des écrous, de sorte à compliquer les opération de vissage en particulier lorsqu'elles doivent être réalisées par un bras robotisé.

### [Exposé de l'invention]

La présente invention vise donc à faciliter le montage d'un tel déflecteur sur un véhicule automobile.

Elle propose à cet effet un déflecteur aérodynamique destiné à être monté sous le soubassement de caisse d'un véhicule automobile, comportant une semelle destinée à recouvrir au moins une portion de ce soubassement de caisse ainsi que des premiers moyens de pré-maintien agencés à une première extrémité longitudinale de ladite semelle et aptes à coopérer avec des moyens complémentaires prévus sur ledit soubassement de sorte à assurer un pré-maintien de ce déflecteur sur ledit soubassement en position suspendue à la verticale, lesdits premiers moyens de pré-maintien étant en outre configurés de sorte que ledit déflecteur puisse librement pivoter vis-à-vis dudit soubassement autour d'un axe transversal de sorte à permettre son rabattement en position horizontale contre ce soubassement ;
caractérisé en ce qu'il comporte des seconds moyens de pré-maintien comprenant un organe de clipsage principal saillant depuis la face supérieure du bord transversal de ladite semelle s'étendant le long de la seconde extrémité longitudinale de cette semelle, ledit organe de clipsage principal étant destiné, lors du rabattement dudit déflecteur en position horizontale de montage contre ledit soubassement, à coopérer par encliquetage avec le bord d'un trou ou d'une découpe correspondant ménagé sur une paroi dudit soubassement..

La présence d'un tel organe de clipsage permet d'assurer le placage du bord transversal de la semelle du déflecteur situé à l'opposé de son axe de pivotement, de sorte à empêcher son cintrage par gravité et à faciliter les opérations de fixation par vissage de ce déflecteur sur le soubassement.

Selon des caractéristiques préférées dudit déflecteur aérodynamique selon l'invention :
- ledit organe de clipsage principal est implanté dans la zone centrale dudit bord transversal ;
- ledit déflecteur comporte également au moins un organe de clipsage secondaire saillant depuis la face supérieure de ladite semelle et destiné également, lors du rabattement dudit déflecteur en position horizontale de montage contre ledit soubassement, à coopérer par encliquetage avec le bord d'un trou ou d'une découpe correspondant ménagé sur une paroi dudit soubassement ;
- chaque dit organe de clipsage comprend un corps creux dans lequel est découpée une patte élastiquement déformable pourvue d'une rampe s'étendant jusqu'à un redent de retenue ;
- ladite patte élastiquement déformable comprend également une languette de préhension saillant en dessous du redent ;
- ladite semelle présente une découpe ménagée sur le pourtour de chaque dit organe de clipsage à l'aplomb de ladite languette, ladite découpe étant dimensionnée de sorte à y permettre l'insertion d'un doigt ;
- le sommet du corps creux de chaque dit organe de clipsage est chanfreiné ; et/ou
- le corps creux dudit organe de clipsage principal est cylindrique.

L'invention vise également sous un second objet un véhicule automobile comportant un soubassement de caisse comprenant un plancher, une batterie de propulsion implantée sous ledit plancher et logée dans un carter de batterie, ainsi qu'au moins un tel déflecteur aérodynamique monté sous le dit soubassement et recouvrant au moins partiellement ledit carter de batterie, chaque dit organe de clipsage étant encliqueté sur le bord d'un trou ou d'une découpe correspondant ménagé sur une paroi dudit carter de batterie.

De manière avantageuse, le véhicule comporte deux tels déflecteurs conformes montés sous le soubassement de caisse dans le prolongement l'un de l'autre de sorte à recouvrir l'intégralité du carter de batterie.

### [Brève description des dessins]

L'exposé de l'invention sera maintenant poursuivi par la description détaillée de plusieurs exemples de réalisation, donnée ci-après à titre illustratif mais non limitatif, en référence aux dessins annexés, sur lesquels :
[Fig 1] représente une vue de dessous en perspective du soubassement de caisse d'un véhicule automobile de type électrique supportant une batterie de propulsion et sur la partie arrière duquel est pré-monté un premier déflecteur aérodynamique arrière selon l'invention ;
[Fig 2] est une vue de dessus en perspective du déflecteur aérodynamique arrière de la figure 1 et de certaines portions du carter de la batterie de propulsion du véhicule coopérant par encliquetage avec ce déflecteur ;
[Fig 3] représente une vue de dessus en perspective de l'organe de clipsage principal du déflecteur arrière de la figure 1 ;
[Fig 4] est une vue de dessous en perspective de l'organe de clipsage principal du déflecteur arrière de la figure 1 ;
[Fig 5] représente une vue de dessous en perspective du soubassement de caisse du véhicule de la figure 1 après le pré-montage d'un second déflecteur aérodynamique avant selon l'invention ;
[Fig 6] est une vue de dessus en perspective des déflecteurs aérodynamique arrière et avant de la figure 5 et de certaines portions du carter de la batterie de propulsion du véhicule coopérant par encliquetage avec ces déflecteurs ; et
[Fig 7] représente une vue de coupe en perspective de la figure 6, prise selon un plan longitudinal vertical traversant l'organe de clipsage principal du déflecteur aérodynamique avant.

### [Description détaillée]

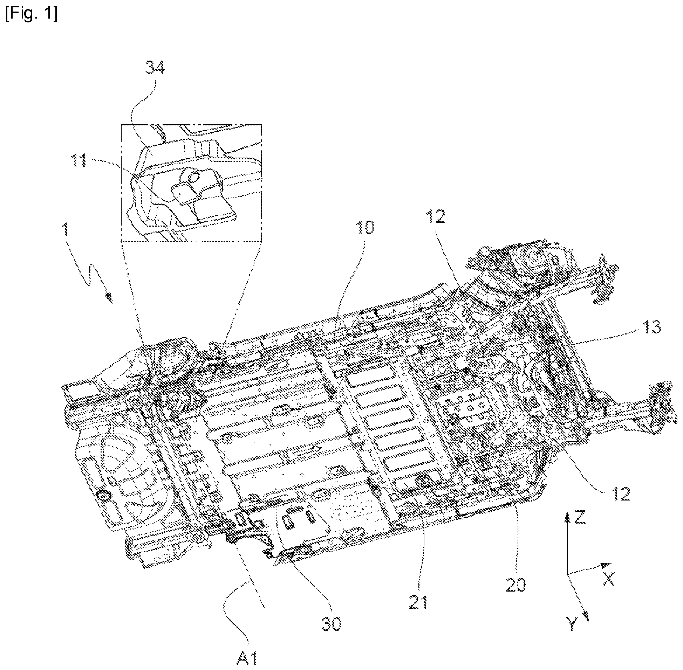

La figure 1 illustre une vue de dessous en perspective de la partie arrière du soubassement de caisse 1 d'un véhicule automobile de type électrique.

On définit par rapport à ce véhicule un repère orthogonal direct XYZ comprenant trois axes perpendiculaires deux à deux, à savoir :
- un axe longitudinal horizontal X, parallèle au sol et orienté selon la direction générale de déplacement du véhicule ;
- un axe transversal horizontal Y, également parallèle au sol et perpendiculaire à l'axe X ; et
- un axe vertical Z, perpendiculaire au sol ainsi qu'au plan XY horizontal.

Dans la description qui va suivre et par convention, les termes « inférieur », « supérieur », « avant » et « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction horizontale.

En référence à cette figure 1, le soubassement de caisse 1 comporte un plancher 10 et une batterie de propulsion 20 implantée sous ce plancher 10 et logée dans un carter de batterie 21.

Comme on peut le remarquer sur cette figure 1, un premier déflecteur aérodynamique arrière 30 selon l'invention vient d'être pré-monté sur la partie arrière de ce soubassement 1 de sorte à recouvrir la partie arrière du carter de batterie 21.

Le déflecteur arrière 30 est avantageusement venu de moulage d'une seule pièce à partir d'un polymère thermoplastique tel que le polypropylène (PP) ou l'acrylonitrile butadiène styrène (ABS), éventuellement chargé en fibres naturelles et/ou synthétiques.

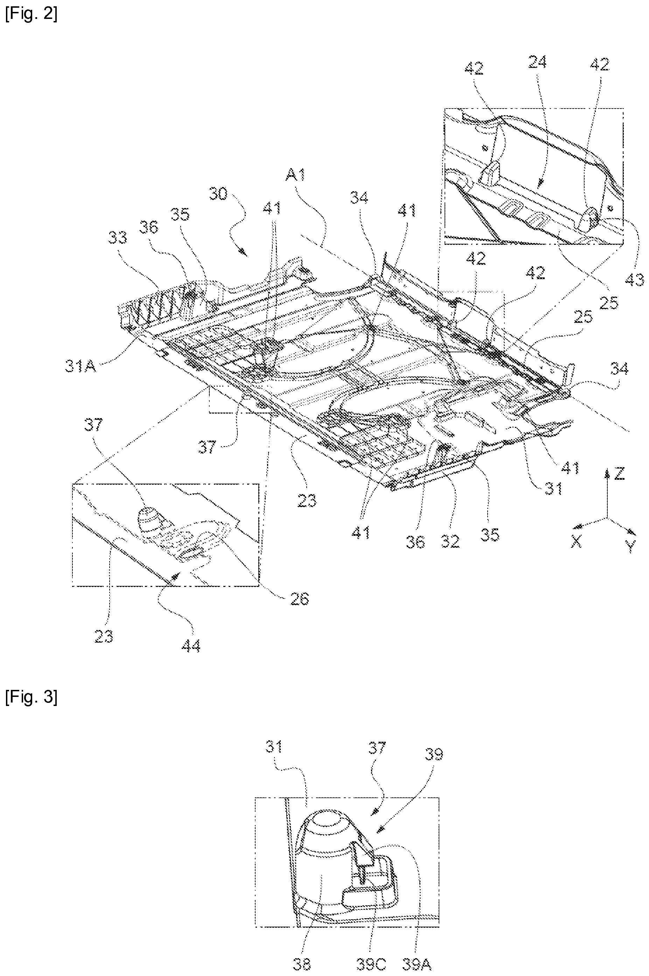

Tel qu'illustré sur la figure 2, ce déflecteur arrière 30 comprend une semelle 31 destinée à s'étendre en regard du plancher 10 et du carter de batterie 21, ainsi que deux bandeaux latéraux 32, 33 bordant latéralement la majeure partie de la semelle 31 en s'étendant sensiblement perpendiculairement à cette dernière.

En vue de son pré-montage sur le soubassement de caisse 1, le déflecteur 30 comprend, au niveau des deux coins de son extrémité longitudinale arrière, deux cages de pré-maintien 34 destinées à s'engager avec deux crochets 11 fixés au plancher 10 (visibles sur la figure 1).

Les cages 34 sont positionnées en saillie sur la semelle 31 de manière à pouvoir être engagées par les crochets 11 lorsque le déflecteur 30 est positionné verticalement sous le soubassement de caisse 1.

Ces cages 34 sont en outre configurées de sorte que ce déflecteur 30 puisse librement pivoter vis-à-vis du soubassement de caisse 1 autour d'un axe transversal A1, de sorte à permettre son rabattement en position horizontale contre ce soubassement 1.

Afin d'assurer son pré-maintien dans cette position horizontale de montage, le déflecteur 30 comprend également deux fûts globalement tronconiques 35 saillant chacun depuis la face intérieure d'un bord latéral correspondant de la semelle 31.

Chaque fût 35 s'étend jusqu'à une paroi supérieure parallèle à la semelle 31 et dans laquelle est ménagée un orifice de passage 36.

Ces orifices de passage 36 sont agencés de manière à être traversés par des goujons correspondants (non visibles sur les figures) soudés aux bords latéraux du plancher 10, ce qui permet ensuite de mettre en place par encliquetage des bagues de pré-maintien sur ces goujons de sorte à assurer le pré-maintien en position de montage du déflecteur 30.

Selon l'invention et afin d'éviter son cintrage lorsqu'il est pré-maintenu en position horizontale de montage, le déflecteur 30 comporte en outre un organe principal de clipsage 37 saillant depuis la zone centrale de la face supérieure du bord transversal avant 31A de la semelle 31 s'étendant le long de l'extrémité longitudinale avant de cette semelle.

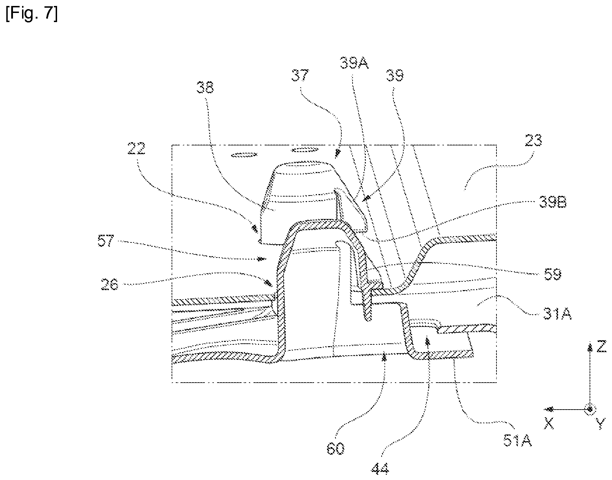

Cet organe 37 est destiné, lors du rabattement du déflecteur 30 en position horizontale de montage contre le soubassement de caisse 1, à coopérer par encliquetage avec le bord d'un trou circulaire correspondant 22 (ou avec le bord d'une découpe) ménagé sur une paroi 23 du carter de batterie 21 (voir figure 7).

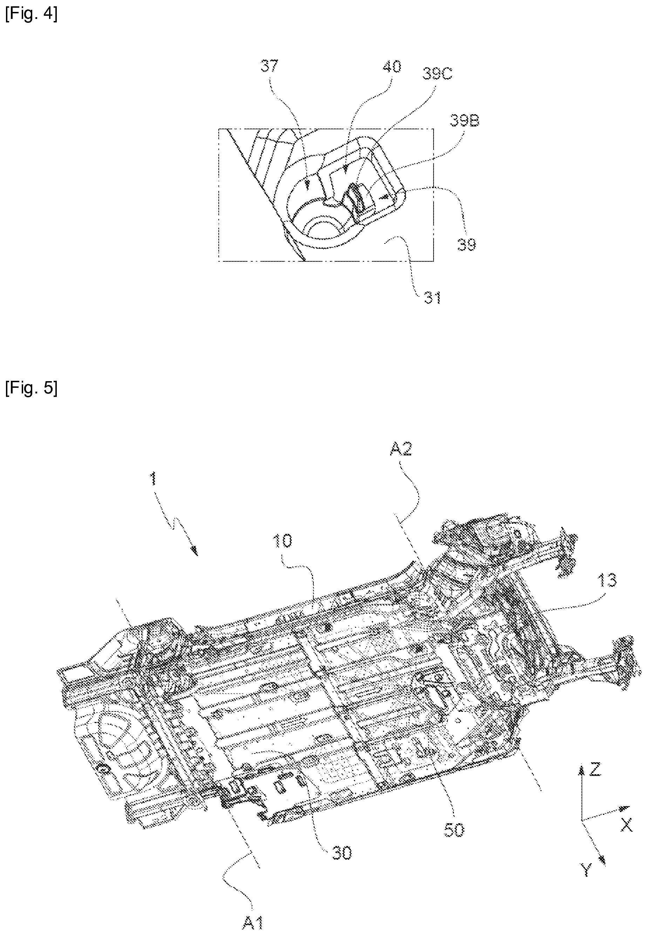

En référence aux figures 3 et 4, l'organe principal de clipsage 37 comprend un corps cylindrique creux 38 présentant avantageusement un sommet chanfreiné de sorte à faciliter son insertion dans le trou 22, et dans lequel est découpée une patte élastiquement déformable 39.

La patte 39 comporte une rampe 39A s'étendant depuis la zone d'accroche au corps 38 jusqu'à un redent de retenue 39B.

Lors du rabattement à pivotement du déflecteur 30 en position horizontale contre le soubassement 1, cet organe de clipsage 37 s'insère au travers du trou 22 ménagé sur la paroi 23 du carter de batterie 21 et la rampe 39A vient en appui contre le bord de ce trou 22.

La poursuite du mouvement de rabattement du déflecteur 30 entraîne la sollicitation de la rampe 39A, ce qui provoque le déplacement radial de la patte 39 vers l'intérieur du corps 38 de cet organe de clipsage 37.

Dès que la rampe 39A a traversé entièrement le trou 22, la patte 39 reprend sa position initiale, de sorte que le redent 39B désormais en regard du pourtour du trou 22 empêche le cintrage par gravité du bord transversal avant 31A de la semelle 31 du déflecteur 30 (voir figure 7).

On remarquera que la patte 39 comprend également une languette de préhension 39C saillant en dessous du redent 39B depuis et le long de son bord intérieur, de sorte à permettre à un opérateur de déclipser l'organe principal de clipsage 37 afin d'assurer un démontage aisé du déflecteur 30 en après-vente.

On notera également que la semelle 31 du déflecteur 30 présente une découpe 40 ménagée sur le pourtour de l'organe principal de clipsage 37 à l'aplomb de la languette 39C, et étant dimensionnée de sorte à permettre à l'opérateur d'y insérer l'un de ses doigts afin qu'il puisse actionner directement avec ce doigt (et donc sans aucun outil particulier) la languette de préhension 39C et réaliser le déclipsage de l'organe 37.

Une fois le déflecteur 30 pré-monté sur le soubassement de caisse 1, sa fixation définitive peut ensuite être réalisée par l'insertion de boulons au travers d'orifices de fixation 41 répartis sur la surface de ce déflecteur 30 (voir figure 2) et leur vissage dans des écrous (non visibles sur les figures) soudés sur le carter de batterie 21.

Ces opérations se trouvent facilitées par le placage du bord transversal avant 31A de la semelle 31 de ce déflecteur 30 contre le soubassement de caisse 1 assuré par le clipsage de l'organe 37 sur le carter de batterie 21.

Par ailleurs et afin d'éviter toute micro-rotation du déflecteur 30 autour de l'axe de l'organe principal de clipsage 37 après son pré-montage qui pourrait également désaligner légèrement les axes de ses orifices de fixation 41 vis-à-vis de ceux des écrous soudés au carter de batterie 21, ce déflecteur 30 comporte avantageusement deux autres organes secondaires de clipsage 42 saillant depuis la face supérieure du bord longitudinal arrière de la semelle 31, et aptes à coopérer respectivement par encliquetage avec un bord latéral rectiligne correspondant d'une découpe rectangulaire 24 (ou avec le bord d'un orifice correspondant) ménagée sur une autre paroi 25 du carter de batterie 21 (voir figure 2).

Ces organes secondaires de clipsage 42 sont semblables à l'organe 37 si ce n'est que leur corps n'est pas cylindrique mais présente une section rectangulaire d'axe longitudinal mieux adaptée à la coopération avec un bord latéral rectiligne correspondant de la découpe rectangulaire 24.

Toujours afin de permettre leur déclipsage avec un doigt, la semelle 31 du déflecteur 30 présente une découpe (non visible) ménagée sur le pourtour de chacun de ces organes secondaires de clipsage 42 à l'aplomb de leur patte 43.

La figure 5 montre une vue de dessous en perspective de la partie arrière du soubassement de caisse 1 sur laquelle un second déflecteur aérodynamique avant 50 selon l'invention vient d'être pré-monté sur la partie avant de ce soubassement 1 dans le prolongement du premier déflecteur arrière 30 de sorte à recouvrir la partie avant du carter de batterie 21 non recouverte par ce déflecteur arrière 30.

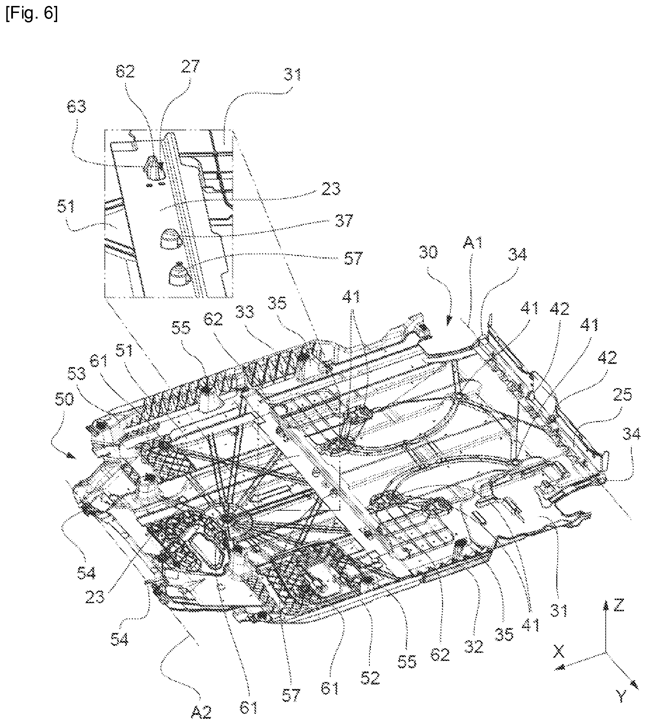

En référence à la figure 6, ce déflecteur avant 50 comprend une semelle 51 destinée à s'étendre en regard du plancher 10 et du carter de batterie 21, ainsi que deux bandeaux latéraux 52, 53 bordant latéralement la majeure partie de la semelle 51 en s'étendant sensiblement perpendiculairement à cette dernière.

En vue de son pré-montage sur le soubassement de caisse 1, le déflecteur 50 comprend, au niveau des deux coins de son extrémité longitudinale avant, deux crochets de pré-maintien 54 destinés à s'engager avec deux ouvertures 12 ménagées dans une platine 13 solidaire du plancher 10 (voir figure 1).

Les crochets 54 sont positionnés en saillie sur la semelle 51 de manière à pouvoir être engagés dans les ouvertures 12 lorsque le déflecteur 50 est positionné verticalement sous le soubassement de caisse 1.

Ces crochets 54 sont en outre configurés de sorte que ce déflecteur 50 puisse librement pivoter vis-à-vis du soubassement de caisse 1 autour d'un axe transversal A2, de sorte à permettre son rabattement en position horizontale contre ce soubassement 1.

Afin d'assurer son pré-maintien dans cette position horizontale de pré-montage dans laquelle le bord transversal arrière 51A de sa semelle 51 vient chevaucher le bord transversal avant 31A de la semelle 31 du déflecteur arrière 30, le déflecteur avant 50 comprend également deux fûts globalement tronconiques 55 saillant chacun depuis la face supérieure d'un bord latéral correspondant de la de la semelle 51 et conformés de manière sensiblement identique aux fûts 35.

Toujours afin d'éviter son cintrage lorsqu'il est pré-maintenu en position horizontale de montage, le déflecteur avant 50 comporte en outre un organe de clipsage 57 saillant depuis la zone centrale de la face supérieure du bord transversal arrière 51A de la semelle 51 s'étendant le long de l'extrémité longitudinale arrière de cette semelle.

Sensiblement identique à l'organe 37, cet organe 57 est destiné, lors du rabattement du déflecteur avant 50 en position horizontale contre le soubassement de caisse 1, à traverser une encoche 44 ménagée dans le bord transversal avant 31A de la semelle 31 du déflecteur arrière 30 (voir figures 2 et 7) et à coopérer par encliquetage avec le bord d'un trou circulaire 26 correspondant (ou avec le bord d'une découpe) ménagé sur la paroi 23 du carter de batterie 21 (voir figure 7).

On notera également en référence à la figure 7 que la semelle 51 du déflecteur avant 50 présente une découpe 60 ménagée sur le pourtour de l'organe principal de clipsage 57 à l'aplomb de sa patte 59, de sorte à permettre son déclipsage avec un doigt.

Une fois le déflecteur avant 50 pré-monté sur le soubassement de caisse 1, sa fixation définitive peut ensuite être réalisée de manière semblable au déflecteur arrière 30 par l'insertion de boulons au travers d'orifices de fixation 61 répartis sur la surface de ce déflecteur 50 et leur vissage dans des écrous (non visibles sur les figures) soudés sur le carter de batterie 21.

Ces opérations se trouvent facilitées par le placage du bord avant de ce déflecteur 50 contre le soubassement de caisse assuré par le clipsage de l'organe 57 sur le carter de batterie 21.

Par ailleurs et afin d'éviter toute micro-rotation du déflecteur avant 50 autour de l'axe de l'organe principal de clipsage 57 après son pré-montage qui pourrait également désaligner légèrement les axes de ses orifices de fixation vis-à-vis de ceux des écrous soudés au carter de batterie 21, ce déflecteur avant 50 comporte avantageusement deux autres organes secondaires de clipsage 62 saillant depuis la face supérieure du bord transversal arrière 51A de la semelle 51, et aptes à coopérer respectivement par encliquetage avec un bord transversal rectiligne correspondant de deux autres orifices 27 (ou avec le bord d'une découpe) ménagés sur la paroi 23 du carter de batterie 21 en étant écartés transversalement l'un de l'autre (voir figure 6).

Ces organes secondaires de clipsage 62 sont semblables aux organes 42 si ce n'est que leur corps à section rectangulaire est orienté transversalement.

Toujours afin de permettre leur déclipsage avec un doigt, la semelle 31 du déflecteur 30 présente une découpe (non visible) ménagée sur le pourtour de chacun de ces organes de clipsage 62 à l'aplomb de leur patte 63.

Selon des variantes de réalisation non représentées, la conformation, l'agencement et/ou le nombre d'organes principaux et secondaires de clipsage que comporte chaque déflecteur peut varier.

D'une manière générale, on rappelle que la présente invention ne se limite pas aux formes de réalisation décrites et représentées, mais qu'elle englobe toute variante d'exécution à la portée de l'homme du métier.

## Revendications

1. Déflecteur aérodynamique (30 ; 50) destiné à être monté sous le soubassement de caisse (1) d'un véhicule automobile, comportant une semelle (31 ; 51) destinée à recouvrir au moins une portion de ce soubassement de caisse (1) ainsi que des premiers moyens de pré-maintien (34 ; 54) agencés à une première extrémité longitudinale de ladite semelle (31 ; 51) et aptes à coopérer avec des moyens complémentaires (11 ; 12) prévus sur ledit soubassement (1) de sorte à assurer un pré-maintien de ce déflecteur (30 ; 50) sur ledit soubassement (1) en position suspendue à la verticale, lesdits premiers moyens de pré-maintien (34 ; 54) étant en outre configurés de sorte que ledit déflecteur (30 ; 50) puisse librement pivoter vis-à-vis dudit soubassement (1) autour d'un axe transversal (A1 ; A2) de sorte à permettre son rabattement en position horizontale contre ce soubassement (1) ;
**caractérisé en ce qu'**il comporte des seconds moyens de pré-maintien comprenant un organe de clipsage principal (37 ; 57) saillant depuis la face supérieure du bord transversal (31A ; 51A) de ladite semelle (31 ; 51) s'étendant le long de la seconde extrémité longitudinale de cette semelle (31 ; 51), ledit organe de clipsage principal (37 ; 57) étant destiné, lors du rabattement dudit déflecteur (30 ; 50) en position horizontale de montage contre ledit soubassement (1), à coopérer par encliquetage avec le bord d'un trou ou d'une découpe correspondant (22 ; 26) ménagé sur une paroi (23) dudit soubassement (1).

2. Déflecteur aérodynamique (30 ; 50) selon la revendication 1, **caractérisé en ce que** ledit organe de clipsage principal (37 ; 57) est implanté dans la zone centrale dudit bord transversal (31A ; 51A).

3. Déflecteur aérodynamique (30 ; 50) selon l'une des revendications 1 ou 2, **caractérisé en ce qu'**il comporte également au moins un organe de clipsage secondaire (42 ; 62) saillant depuis la face supérieure de ladite semelle (31 ; 51) et destiné également, lors du rabattement dudit déflecteur (30 ; 50) en position horizontale de montage contre ledit soubassement (1), à coopérer par encliquetage avec le bord d'un trou ou d'une découpe correspondant (24 ; 27) ménagé sur une paroi (25 ; 23) dudit soubassement (1).

4. Déflecteur aérodynamique selon l'une des revendications 1 à 3, **caractérisé en ce que** chaque dit organe de clipsage (37, 42 ; 57, 62) comprend un corps creux (38) dans lequel est découpée une patte élastiquement déformable (39, 43 ; 59, 63) pourvue d'une rampe (39A) s'étendant jusqu'à un redent de retenue (39B).

5. Déflecteur aérodynamique selon la revendication 4, **caractérisé en ce que** ladite patte élastiquement déformable (39, 43 ; 59, 63) comprend également une languette de préhension (39C) saillant en dessous du redent (39B).

6. Déflecteur aérodynamique selon la revendication 5, **caractérisé en ce que** ladite semelle (31 ; 51) présente une découpe (40 ; 60) ménagée sur le pourtour de chaque dit organe de clipsage (37, 42 ; 57, 62) à l'aplomb de ladite languette (39C), ladite découpe (40 ; 60) étant dimensionnée de sorte à y permettre l'insertion d'un doigt.

7. Déflecteur aérodynamique selon l'une des revendications 4 à 6, **caractérisé en ce que** le sommet du corps creux (38) de chaque dit organe de clipsage (37, 42 ; 57, 62) est chanfreiné.

8. Déflecteur aérodynamique selon l'une des revendications 4 à 7, **caractérisé en ce que** le corps creux (38) dudit organe de clipsage principal (37 ; 57) est cylindrique.

9. Véhicule automobile comportant un soubassement de caisse (1) comprenant un plancher (10), une batterie de propulsion (20) implantée sous ledit plancher (10) et logée dans un carter de batterie (21), ainsi qu'au moins un déflecteur aérodynamique (30 ; 50) monté sous le dit soubassement (1) et recouvrant au moins partiellement ledit carter de batterie (21), **caractérisé en ce que** le au moins dit déflecteur (30 ; 50) est conforme à l'une des revendications 1 à 8 et **en ce que** chaque dit organe de clipsage (37, 42 ; 57, 62) est encliqueté sur le bord d'un trou ou d'une découpe correspondant (22, 24 ; 26, 27) ménagé sur une paroi (23, 25 ; 23) dudit carter de batterie (21).

10. Véhicule automobile selon la revendication 9, **caractérisé en ce qu'**il comporte deux dits déflecteurs (30, 50) conformes à l'une des revendications 1 à 8 et montés sous le soubassement de caisse (1) dans le prolongement l'un de l'autre de sorte à recouvrir l'intégralité dudit carter de batterie (21).

## Patentansprüche

1. Aerodynamische Ablenkeinrichtung (30; 50) zum Anbringen unter dem Unterboden (1) eines Kraftfahrzeugs, mit einer Sohle (31; 51) zum Abdecken mindestens eines Abschnitts dieses Unterbodens (1) sowie ersten Vorhaltemitteln (34; 54), die an einem ersten Längsende der Sohle (31; 51) angeordnet sind und mit komplementären Mitteln (11; 12) zusammenwirken können, die an dem Unterboden (1) vorgesehen sind, um einen Vorhaltemittel für diesen zu gewährleisten Die erste Vorhalteeinrichtung (34; 54) ist ferner so konfiguriert, dass die Ablenkeinrichtung (30; 50) in vertikal aufgehängter Position an dem Unterbau (1) frei um eine Querachse (A1; A2) gegenüber dem Unterbau (1) schwenkbar ist, sodass sie in horizontale Position gegen den Unterbau (1) klappen kann;
es ist **dadurch gekennzeichnet, dass** es zweite Vorhaltemittel umfasst, die ein Hauptclipsorgan (37; 57) umfassen, das von der Oberseite des Querrandes (31A; 51A) der Sohle (31; 51) vorsteht, die sich entlang des zweiten Längsendes dieser Sohle (31; 51) erstreckt, wobei das Hauptclipsorgan (37; 57) beim Umklappen des Deflektors (30; 50) in die horizontale Montageposition gegen den Unterbau (1) dazu bestimmt ist, durch Einrasten zusammenzuwirken mit dem Rand eines entsprechenden Lochs oder Ausschnitts (22; 26) an einer Wand (23) des Untergrundes (1).

2. Aerodynamische Leiteinrichtung (30; 50) nach Anspruch 1, **dadurch gekennzeichnet, dass** das Hauptclipselement (37; 57) in den mittleren Bereich der Querkante (31A; 51A) implantiert ist.

3. Aerodynamische Leiteinrichtung (30; 50) nach einem der Ansprüche 1 oder 2, **dadurch gekennzeichnet, dass** sie auch mindestens ein sekundäres Einklipselement (42; 62) aufweist, das von der Oberseite der Sohle (31; 51) vorsteht und auch dazu bestimmt ist, beim Umklappen der Leiteinrichtung (30; 50) in die horizontale Montageposition gegen den Unterbau (1) durch Einrasten mit dem Rand eines entsprechenden Lochs oder Ausschnitts (24; 27) zusammenzuwirken, der an einer Wand ausgebildet ist (25; 23) des Untergrundes (1).

4. Aerodynamische Leiteinrichtung nach einem der Ansprüche 1 bis 3, **dadurch gekennzeichnet, dass** jedes Einrastelement (37, 42; 57, 62) einen Hohlkörper (38) umfasst, in den ein elastisch verformbarer Ansatz (39, 43; 59, 63) geschnitten ist, der mit einer Rampe (39A) versehen ist, die sich zu einer Halteschlitzung (39B) erstreckt.

5. Aerodynamische Leiteinrichtung nach Anspruch 4, **dadurch gekennzeichnet, dass** die elastisch verformbare Lasche (39, 43; 59, 63) auch eine Greifzunge (39C) aufweist, die unterhalb des Schlitzes (39B) vorsteht.

6. Aerodynamische Leiteinrichtung nach Anspruch 5, **dadurch gekennzeichnet, dass** die Sohle (31; 51) einen Ausschnitt (40; 60) aufweist, der am Umfang jedes der Klemmglieder (37, 42; 57, 62) senkrecht zur Zunge (39C) ausgebildet ist, wobei der Ausschnitt (40; 60) so bemessen ist, dass er das Einführen eines Fingers ermöglicht.

7. Aerodynamische Leiteinrichtung nach einem der Ansprüche 4 bis 6, **dadurch gekennzeichnet, dass** die Spitze des Hohlkörpers (38) jedes Einrastelements (37, 42; 57, 62) abgeschrägt ist.

8. Aerodynamische Leiteinrichtung nach einem der Ansprüche 4 bis 7, **dadurch gekennzeichnet, dass** der Hohlkörper (38) des Hauptclipsorgans (37; 57) zylindrisch ist.

9. Kraftfahrzeug mit einem Aufbauboden (1), der einen Boden (10), eine Antriebsbatterie (20), die unter dem Boden (10) angeordnet und in einem Batteriegehäuse (21) untergebracht ist, und mindestens einer aerodynamischen Ablenkeinrichtung (30; 50), die unter dem Boden (1) angebracht ist und das Batteriegehäuse (21) mindestens teilweise abdeckt, **dadurch gekennzeichnet, dass** die mindestens eine Ablenkeinrichtung (30; 50) einem der Ansprüche 1 bis 8 entspricht Jedes der Klemmglieder (37, 42; 57, 62) ist mit dem Rand eines entsprechenden Lochs oder Ausschnitts (22, 24; 26, 27) in einer Wand (23, 25; 23) des Batteriegehäuses (21) verrastet.

10. Kraftfahrzeug nach Anspruch 9, **dadurch gekennzeichnet, dass** es zwei Ablenkbleche (30, 50) nach einem der Ansprüche 1 bis 8 aufweist, die unter dem Unterbau der Karosserie (1) in der Verlängerung voneinander angebracht sind, sodass sie das gesamte Batteriegehäuse (21) bedecken.

## Claims

1. Aerodynamic deflector (30; 50) intended to be mounted under the body base (1) of a motor vehicle, comprising a sole (31; 51) intended to cover at least a portion of this body base (1) and first pre-holding means (34; 54) arranged at a first longitudinal end of said sole (31; 51) and capable of cooperating with complementary means (11; 12) provided on said base (1) so as to ensure pre-holding of this sole deflector (30; 50) on said underframe (1) in a position suspended vertically, said first pre-holding means (34; 54) being further configured so that said deflector (30; 50) can freely pivot relative to said underframe (1) about a transverse axis (A1; A2) so as to allow it to be folded in horizontal position against this underframe (1);
wherein it comprises second pre-holding means comprising a main snap-fastening member (37; 57) projecting from the upper face of the transverse edge (31A; 51A) of said sole (31; 51) extending along the second longitudinal end of this sole (31; 51), said main snap-fastening member (37; 57) being intended, when said deflector (30; 50) is folded down in a horizontal position of assembly line against said base (1), to cooperate by snap-fastening with the edge of a corresponding hole or cut (22; 26) made on a wall (23) of said base (1).

2. Aerodynamic deflector (30; 50) according to claim 1, wherein said main clipping member (37; 57) is installed in the centre zone of said transverse rim (31A; 51A).

3. Aerodynamic deflector (30; 50) according to either of claims 1 and 2, **characterised in that** it also comprises at least one secondary clipping member (42; 62) projecting from the upper face of the said sole (31; 51) and also intended, when the said deflector (30; 50) is folded down in horizontal assembly line position against the said base (1), to cooperate by snap-fastening with the edge of a corresponding hole or cut-out (24; 27) made in a wall (25; 23) of said base (1).

4. Aerodynamic deflector according to one of claims 1 to 3, **characterised in that** each said clipping member (37, 42; 57, 62) comprises a hollow body (38) in which is cut out an elastically deformable lug (39, 43; 59, 63) provided with a ramp (39A) extending as far as a retained tooth (39B).

5. Aerodynamic deflector according to claim 4, **characterised in that** the said elastically deformable tab (39, 43; 59, 63) also comprises a gripping tongue (39C) projecting below the tooth (39B).

6. Aerodynamic deflector according to claim 5, **characterised in that** the said sole (31; 51) has a cut-out (40; 60) formed on the periphery of each of the said clipping members (37, 42; 57, 62) in line with the said tongue (39C), the said cut-out (40; 60) being dimensioned so as to allow a finger to be inserted therein.

7. Aerodynamic deflector according to one of claims 4 to 6, **characterised in that** the top of the hollow body (38) of each of the said clipping members (37, 42; 57, 62) is chamfered.

8. Aerodynamic deflector according to one of claims 4 to 7, **characterised in that** the hollow body (38) of the said main clipping member (37; 57) is cylindrical.

9. Motor vehicle comprising a body base (1) comprising a floor (10), a propulsion battery (20) installed beneath said floor (10) and housed in a battery casing (21), and at least one aerodynamic deflector (30; 50) mounted beneath said base (1) and at least partially covering said battery casing (21), **characterised in that** the at least said deflector (30; 50) is in accordance with one of claims 1 to 8 and **in that** each said clipping member (37, 42; 57, 62) is snap-fastened to the edge of a corresponding hole or cut-out (22, 24; 26, 27) provided on a wall (23, 25; 23) of said battery casing (21).

10. Motor vehicle according to claim 9, **characterised in that** it comprises two said deflectors (30, 50) in accordance with one of Claims 1 to 8 and mounted under the body base (1) in the extension of one another so as to cover the whole of the said battery casing (21).
